# EUROPEAN PATENT APPLICATION

(11) **EP 1 479 703 A1**
(43) Date of publication of application: **24.11.2004**
(21) Application number: 03705364.2
(22) Date of filing: 20.02.2003
(51) Int. Cl.: C08F 290/06, B01D 21/01, C02F 11/14

(54) **WATER-SOLUBLE COPOLYMER, POLYMERIC FLOCCULANT, AND METHOD OF DEHYDRATING SLUDGE**

(30) Priority: 28.02.2002 JP 2002053492; 05.03.2002 JP 2002058765
(71) Applicant: TOAGOSEI CO., LTD., Minato-ku, Tokyo 105-0003 (JP)
(72) Inventor: MORI, Yoshio, Toagosei Co., Ltd., Minato-ku, Nagoya-shi, Aichi 455-0027 (JP); TAKEDA, Ken, c/o Toagosei Co., Ltd., Minato-ku, Nagoya-shi, Aichi 455-0027 (JP)
(74) Representative: Ward, David Ian
(86) International application number: PCT/JP2003/001878
(87) International publication number: WO 2003/072622

(57) **Abstract**

A novel water-soluble copolymer includes a polymer produced by polymerization of a water-soluble monomer and a polyalkyleneoxide oligomer having a specific ethylenically unsaturated group at one end thereof with. An aqueous solution of the polymer has a viscosity of 10,000 mPa·s or more (measured with a Brookfield viscometer, concentration: 20 weight percent). The water-soluble copolymer can be satisfactorily produced without causing problems such as gelation. When used in a sludge dewatering treatment, the copolymer provides flocs superior in flocculating strength, moisture content, and filtration rate. The water-soluble copolymer is useful as, for example, a retention aid, a paper strength agent, and a thickener. Also provided are a polymeric flocculant composed of the water-soluble copolymer and a method for dewatering treatment including the steps of adding the water-soluble copolymer to sludge and dewatering the mixture.

## Description

### Technical Field

The present invention relates to a novel water-soluble copolymer useful as a retention aid, a paper strength agent, a thickener, and in particular, a polymeric flocculant, and to a manufacturing technology of polymers and a related technology of the above applications.

### Background Art

In general, water-soluble polymers, in particular, high-molecular weight water-soluble polymers are used in various technical fields such as polymeric flocculants, retention aids, paper strength agents, and thickeners.

Such water-soluble polymers include homopolymers prepared by polymerizing an anionic monomer such as an acrylate or a methacrylate (hereinafter, acryl and methacryl are referred to as "(meth)acryl" in combination and acrylate and methacrylate are referred to as "(meth)acrylate" in combination), a cationic monomer such as dimethylaminoethyl(meth)acrylate quaternary salt, or a nonionic monomer such as (meth)acrylamide and also include ionic polymers such as copolymers of an anionic monomer and a nonionic monomer; copolymers of a cationic monomer and a nonionic monomer; and copolymers of a cationic monomer, an anionic monomer, and a nonionic monomer.

Various flocculants including a polymeric flocculant have been widely used in order to flocculate and dewater sludge generated from municipal sewage and industrial wastewater. For example, in a method disclosed in Japanese Unexamined Patent Application Publication No. 58-51998, poly(iron sulfate) is used as an inorganic flocculant and a nonionic, anionic, or cationic polymeric flocculant is added alone to form flocs and dewater sludge. Japanese Unexamined Patent Application Publication No. 59-16599 discloses a method for dewatering sludge using an inorganic flocculant and an amphoteric polymeric flocculant having cationic and anionic properties. Furthermore, in a method disclosed in Japanese Unexamined Patent Application Publication No. 63-158200, an inorganic flocculant is added to sludge and then the pH is controlled to 5 to 8. Subsequently, an amphoteric polymeric flocculant is added to the sludge.

In addition, various trials to improve polymers used as a polymeric flocculant have been done. For example, Japanese Unexamined Patent Application Publication No. 4-96913 discloses a flocculant composed of a polymer including a (meth)acrylate-terminated polyalkyleneoxide oligomer unit having an alkylene oxide skeleton being repeated 1 to 5 times, a (meth)acrylamide unit, and a cationic monomer unit. Japanese Unexamined Patent Application Publication No. 11-156400 discloses a sludge dewatering agent composed of an amphoteric copolymer produced by copolymerization of a cationic monomer, an anionic monomer, a water-soluble nonionic monomer, and a hydrophobic acrylic acid derivative having a solubility in water of 1 g or less, for example, an alkyl (meth)acrylate having 8 or more carbon atoms, which are the essential components.

According to the polymers disclosed in the above patent documents, which are used as a preferable flocculant or a sludge dewatering agent, however, problems reside in the polymerization steps of the monomers. For example, gelation readily occurs in the polymerization step. In particular, in the production of high-molecular weight polymers, gelation occurs entire in the reaction system. Unfortunately, when the polymerization is performed with a view to avoiding gelation, only a low molecular weight polymer is produced, or a copolymer having a desired composition cannot be produced. In the latter case, since the copolymerization reactivity is significantly different in each monomer, a copolymer according to the initial ratio of each monomer is difficult to produce. Consequently, the desired improvement of the performance cannot be achieved. Even if the desired copolymer is produced, a sufficient advantage cannot be achieved in some types of the target sludge.

Furthermore, sludge generated from municipal sewage and industrial wastewater has been increasing because of changes in the recent living environment. But the increase in consumption of flocculants and sludge dewatering machine must be suppressed. Therefore, flocculation and dewatering must be effectively performed with smaller amounts of flocculants or sludge dewatering agents. Flocculants and sludge dewatering agents having such a superior performance have been strongly desired.

In view of the above situations, the present inventors studied for a stable production of a polymer that is used as a polymeric flocculant and provides flocs having a superior balance in flocculating strength, filtration rate, and moisture content in sludge dewatering treatment. As a result of the above study, the present inventors proposed a block copolymer prepared by polymerization of a water-soluble monomer under the presence of a compound including a polyalkyleneoxide group having an azo group (Japanese Unexamined Patent Application Publication No. 2002-97236).

Furthermore, the present inventors have continuously studied a water-soluble polymer that provides flocs excellent in flocculating strength, moisture content, and filtration rate. The water-soluble polymer has a superior property in flocculationability and also provides the above superior dewatering effect of sludge for all types of sludge, in particular, even for sludge containing a large amount of excess sludge.

Consequently, the present inventors have found that a novel high-molecular weight water-soluble polymer including an essential unit composed of a polyalkyleneoxide oligomer having a specific ethylenically unsaturated group at one end thereof is satisfactorily produced without causing problems such as gelation. When used in sludge dewatering treatment, the water-soluble polymer provides flocs excellent in flocculating strength, moisture content, and filtration rate. Furthermore, the water-soluble polymer is useful as, for example, a retention aid, a paper strength agent, and a thickener.

Also, the present inventors have prepared the above novel water-soluble polymers having different cationic properties and have found the mixture of them performs more efficiently the sludge dewatering treatment. In other words, the present inventors have found that the dewatering treatment, for example, in sludge containing a large amount of excess sludge, in which the ratio of the treatment of activated sludge in wastewater is higher than a known ratio in order to decrease the value of chemical oxygen demand (COD) after the wastewater treatment, in particular, in a sludge mixture including raw sludge and excess sludge can be performed efficiently.

The present inventors have accomplished the present invention based on this knowledge.

### Disclosure of Invention

An invention described in claim 1 of the present invention provides a water-soluble copolymer comprising a polymer produced by polymerizing a water-soluble monomer comprising a cationic monomer or a mixture of a cationic monomer and another monomer with a polyalkyleneoxide oligomer having an ethylenically unsaturated group represented by general formula (1) at one end thereof, wherein an aqueous solution of the polymer has a viscosity of 10,000 mPa·s or more (measured with a Brookfield viscometer, concentration: 20 weight percent):

R¹CH=C(R²)-X- (1)

[wherein each of R¹ and R² represents a hydrogen atom or an alkyl group of 1 to 3 carbon atoms; X represents -R³O-, -O-, or -R⁴NHCOO-; each of R³ and R⁴ represents an alkylene group of 1 to 4 carbon atoms, -Ph-, or -Ph-R⁵-; Ph represents a phenylene group that may have a substituent; and R⁵ represents an alkylene group of 1 to 4 carbon atoms]. Preferably, the water-soluble monomer comprises a mixture of a cationic monomer and an anionic monomer, or the mixture further includes another monomer.
Preferably, the number of repeating units of the alkylene oxide unit in the polyalkyleneoxide oligomer is 5 or more. More preferably, the polyalkyleneoxide oligomer has an alkoxyl group of 1 to 8 carbon atoms at the other end thereof.

Preferably, the polymer comprises a mixture including a polymer produced by polymerization of a water-soluble monomer containing 60 to 100 mole percent of a cationic monomer and a polymer produced by polymerization of a water-soluble monomer containing 0 to 50 mole percent of a cationic monomer.

Preferably the polymer comprises a mixture including a polymer produced by polymerization of a water-soluble monomer containing 60 to 100 mole percent of a cationic monomer and a polymer produced by polymerization of a water-soluble monomer containing 10 to 50 mole percent of a cationic monomer.

The present invention also provides a polymeric flocculant including a water-soluble copolymer according to the present invention.

The present invention also provides a method for dewatering sludge including the steps of adding a water-soluble copolymer according to the present invention to sludge, and dewatering the mixture.

### Best Mode for Carrying Out the Invention

A water-soluble copolymer, a polymeric flocculant composed of this water-soluble copolymer, and a method for dewatering sludge using the water-soluble copolymer of the present invention will now be described in detail.

The water-soluble copolymer of the present invention is a copolymer of a water-soluble monomer and a polyalkyleneoxide oligomer having a specific ethylenically unsaturated group at one end thereof. The copolymer has a graft skeleton in which the polyalkyleneoxide is bonded to the main chain in a comb shape.

The ethylenically unsaturated group in the polalkyleneoxide oligomer is represented by general formula (1). Another ethylenically unsaturated group such as a (meth)acryloyl group readily causes gelation in the production of the copolymer. Even if gelation does not occur, the resultant copolymer is not water-soluble.

R¹CH=C(R²)-X- (1)

[wherein each of R¹ and R² represents a hydrogen atom or an alkyl group of 1 to 3 carbon atoms; X represents -R³O-, -O-, or -R⁴NHCOO-; each of R³ and R⁴ represents an alkylene group of 1 to 4 carbon atoms, -Ph-, or -Ph-R⁵-; Ph represents a phenylene group that may have a substituent; and R⁵ represents an alkylene group of 1 to 4 carbon atoms.]

The alkyl group of 1 to 3 carbon atoms in R¹ and R² is preferably a methyl group.

The symbol X represents -R³O-, -O-, or -R⁴NHCOO-. Another bond such as an ester bond readily causes gelation in the production of the copolymer. Even if gelation does not occur, the resultant copolymer is not water-soluble. The symbol X is preferably -R³O- or -O-.

Each of R³ and R⁴ represents an alkylene group of 1 to 4 carbon atoms, -Ph-, or -Ph-R⁵-; Ph represents a phenylene group that may have a substituent, and R⁵ represents an alkylene group of 1 to 4 carbon atoms.

The alkylene group in R³ and R⁴ may be linear or branched. Examples of the phenylene group that may have a substituent include a p-phenylene group, an m-phenylene group, and the mixture thereof. The phenylene group is preferably a p-phenylene group. Examples of the substituent in the phenylene group include an alkyl group and an alkyl ester group.

The alkylene group in R⁵ may be linear or branched. In particular, R³ and R⁴ is preferably a methylene group or phenylene group.

Examples of the ethylenically unsaturated group represented by general formula (1) include allyloxy, methallyloxy, allylethoxy, allylpropoxy, allylbutoxy, propenyloxy, and vinylbenzyloxy groups. In view of superior reactivity and availability, allyloxy, methallyloxy, and propenyloxy groups are preferable.

Examples of the alkylene oxide that forms the main chain of the polyalkyleneoxide oligomer include ethylene oxide, propylene oxide, and butylene oxide. Specifically, examples of the polyalkyleneoxide oligomer include polyethyleneoxide oligomer, polypropyleneoxide oligomer, and polybutyleneoxide oligomer.

The polyalkyleneoxide oligomer may include two or more of these polyalkyleneoxide oligomers as a block structure, for example, polyethyleneoxide/polypropyleneoxide block oligomer.

The number of repeating units of the alkylene oxide in the polyalkyleneoxide is preferably 5 or more, more preferably, 5 to 80. When the number is less than 5, a flocculant or a dewatering agent prepared from the water-soluble copolymer does not have a sufficient dewatering performance. On the other hand, when the number exceeds 80, the unpolymerized material is increased and a flocculant or a dewatering agent prepared from the water-soluble copolymer does also not have a sufficient dewatering performance.

The structure of the other end of the polyalkyleneoxide oligomer is not necessarily limited. In order to achieve the object of the present invention, the other end of the polyalkyleneoxide oligomer is preferably an alkoxy group of 1 to 8 carbon atoms such as methoxy, ethoxy, and butoxy groups. In this case, the polymer can be stably produced without gelation.

In order to prepare these polyalkyleneoxide oligomers, a general polyalkyleneoxide oligomer is esterified, etherified, or urethanated with an alcohol or an isocyanate compound. Some of these polyalkyleneoxide oligomers are commercially available. Such commercially available oligomers may be used in the present invention.

Examples of the water-soluble monomer copolymerized with the polyalkyleneoxide oligomer include a cationic monomer, a cationic monomer and an anionic monomer or a nonionic monomer or a mixture of them that are industrially used. According to the present invention, as a main component, a cationic monomer or a mixture of a cationic monomer and an anionic monomer is preferably used.

Any cationic monomer can be used without limitations as long as the monomer has radical polymerizability. Examples of the cationic monomer include tertiary salts such as hydrochlorides and sulfates of dialkylaminoalkyl (meth)acrylates, e.g., dimethylaminoethyl(meth)acrylate, diethylaminoethyl(meth)acrylate, and diethylamino-2-hydroxypropyl(meth)acrylate; tertiary salts such as hydrochlorides and sulfates of dialkylaminoalkyl(meth)acrylamides, e.g., dimethylaminopropyl(meth)acrylamide; quaternary salts such as halogenated alkyl adducts, e.g., methyl chloride adducts and halogenated aryl adducts, e.g., benzyl chloride adducts of dialkylaminoalkyl(meth)acrylates; and quaternary salts such as halogenated alkyl adducts, e.g., methyl chloride adducts and halogenated aryl adducts, e.g., benzyl chloride adducts of dialkylaminoalkyl(meth)acrylamides. In particular, tertiary salts or quaternary salts of dialkylaminoalkyl(meth)acrylamides are preferably used.

Any anionic monomer can be used without limitations as long as the monomer has radical polymerizability. Examples of the anionic monomer include unsaturated carboxylic acids and salts thereof. Specifically, examples of the anionic monomer include acrylic acid, methacrylic acid, crotonic acid, itaconic acid, and maleic acid. Preferable monomers in the present invention include acrylic acid and methacrylic acid.

Examples of the salts of the unsaturated carboxylic acids include ammonium salts and alkali metal salts such as sodium salts and potassium salts.

Examples of the nonionic monomer include (meth)acrylamide, dimethylacrylamide, diethylacrylamide, methyl acrylate, ethyl acrylate, butyl acrylate, hydroxyethyl acrylate, methoxyethyl acrylate, butoxyethyl acrylate, ethyl carbitol acrylate, acrylonitrile, and vinyl acetate. In particular, (meth)acrylamide is preferably used.

Those anionic monomers and nonionic monomers may be used alone or in combination of two or more with cationic monomers. As described above, as a main component a cationic monomer or a mixture of a cationic monomer and an anionic monomer is preferable. These monomers improve the copolymerizability of the water soluble monomers.

When a cationic monomer is used, or when a cationic monomer and an anionic monomer are used, (meth)acrylamide is preferably used in combination as a nonionic monomer. This is preferable in that copolymerizability of the water-soluble monomers and the oligomer can be improved and the characteristics of the resultant copolymer can be controlled.

When (meth)acrylamide is used with a cationic monomer in combination, the ratio of (meth)acrylamide to the total of the water-soluble monomers is preferably 1 to 90 mole percent. When (meth)acrylamide is used with a cationic monomer and an anionic monomer in combination, the ratio of (meth)acrylamide to the total of the water-soluble monomers is preferably 5 to 80 mole percent.

Regarding the copolymerization ratio of the polyalkyleneoxide oligomer to the water-soluble monomers, the ratio of the polyalkyleneoxide oligomer to the total amount monomers is preferably 0.05 to 10 mole percent.

When the ratio is less than 0.05 mole percent, the improvement in flocculation due to copolymerization of the polyalkyleneoxide oligomer is not achieved. When the ratio exceeds 10 mole percent, a large amount of monomer that is not polymerized remains or the resultant copolymer is insoluble in water.

When a cationic monomer and an anionic monomer are used in combination as the water-soluble monomers, the ratio of the cationic monomer to the total amount of the water-soluble monomers is preferably 1 to 85 mole percent, more preferably, 5 to 50 mole percent. The ratio of the anionic monomer to the total amount of the water-soluble monomers is preferably 1 to 40 mole percent, more preferably, 1 to 30 mole percent.

In particular, according to the present invention, a preferable water-soluble copolymer includes a mixture of a polymer prepared by copolymerization of a water-soluble monomer including 60 to 100 mole percent of a cationic monomer and a polymer prepared by copolymerization of a water-soluble monomer including 0 to 50 mole percent, more preferably, 10 to 50 mole percent of a cationic monomer.

In order to produce a copolymer, a mixture of polyalkyleneoxide oligomer having an ethylenically unsaturated group, a water-soluble monomer, and another polymerizable monomer that is used in combination according to need are polymerized by a general method to produce a water-soluble polymer. In particular, the polymerization is preferably performed in an aqueous medium.

An aqueous solution polymerization will now be described as an example of such a polymerization in an aqueous medium. For example, an aqueous solution containing 10 to 80 weight percent, preferably, 25 to 60 weight percent of monomers is polymerized in the absence of oxygen using a polymerization initiator for 0.1 to 10 hours. The temperature at the polymerization initiation is 0°C to 35°C and the polymerization temperature is 100°C or less.

Examples of the polymerization initiator include persulfates such as sodium persulfate and potassium persulfate; organic peroxides such as benzoyl peroxide; azo compounds such as 2,2'-azobis(amidinopropane) hydrochloride, azobiscyanovaleric acid, 2,2'-azobisisobutyronitrile, and 2,2'-azobis[2-methyl-N-(2-hydroxyethyl)-propionamide]; and redox catalysts composed of a combination of, for example, hydrogen peroxide or sodium persulfate with sodium bisulfite or ferrous sulfate.

Polymerization may be performed with ultraviolet irradiation. For example, a photoinitiator composed of the ketals or acetophenones may be used for the polymerization.

The content of the polymerization initiator is determined according to, for example, the polymerization degree or viscosity of the desired copolymer. The content of the initiator is preferably 10 to 20,000 ppm based on the total amount of all monomers and the polymerization initiator.

The molecular weight of the copolymer may be controlled by changing the type and ratio of the monomers and the polymerization initiator used. In addition, a chain-transfer agent may be used to control the molecular weight of the copolymer by changing the type and ratio of the chain-transfer agent.

Examples of the chain-transfer agent include thiol compounds such as mercaptoethanol and mercaptopropionic acid; and reducing inorganic salts such as sodium sulfite, sodium hydrogen sulfite, and sodium hypophosphite.

In the production of a high-molecular weight copolymer used as a flocculant, the content of the polymerization initiator is preferably 10 to 2,000 ppm, whereas in the production of a copolymer used as a papermaking agent, the content of the polymerization initiator is preferably 100 to 20,000 ppm.

According to a water-soluble copolymer described above, a polymer having high cationic property and a polymer having low cationic property may be separately prepared by polymerization, and may be then mixed to prepare the mixture. Any preparation method may be used. For example, the two polymers may be mixed in advance, or may be mixed when the polymers are used. In addition, a plurality of polymers having a different copolymerization ratio of the cationic monomer unit may be prepared according as necessary.

According to the copolymer of the present invention, an aqueous solution containing 20 weight percent of the copolymer has a viscosity of 10,000 mPa·s or more, when measured with a Brookfield viscometer. Such a high viscosity is one of the reasons why this copolymer can be used for various applications. For example, the copolymer of the present invention is useful as a polymeric flocculant; papermaking chemical agents used in the papermaking process such as a retention aid, a paper strength agent, a pitch controller, and a sizing agent; a thickener used for, for example, a coating material; and a substrate for a plaster. In particular, the copolymer of the present invention is preferably useful as a polymeric flocculant and a papermaking chemical agent.

The present invention is also applicable to a copolymer in which the weight-average molecular weight exceeds 1,000,000. An aqueous solution containing 20 weight percent of such an ultrahigh-molecular weight copolymer is a gel, and therefore, the viscosity cannot be measured. However, the copolymer can be used without a problem.

The copolymer produced in the present invention is, in particular, useful as a polymeric flocculant. The method for using the copolymer as a polymeric flocculant will now be described.

A copolymer having an average molecular weight in the order of a few million to between ten and twenty million is preferably used as a flocculant. In particular, a 0.5% salted viscosity measured by a method described below is preferably 5 to 200 mPa·s, and a 0.1% insoluble residue measured by a method described below after washing is preferably 5 mL or less.

### 0.1% Insoluble residue:

A copolymer is dissolved in purified water to prepare a 0.1 weight percent solution (on the basis of a solid) (400 mL). The whole solution is filtered through an 83-mesh sieve having a diameter of 20 cm. The insoluble residue on the sieve is recovered and the volume thereof is measured.

### 0.5% Salted viscosity:

A copolymer is dissolved in an aqueous solution containing 4 weight percent of sodium chloride to prepare a solution containing 0.5 weight percent of the copolymer. The viscosity of the copolymer solution is measured with a Brookfield viscometer after 5 minutes at 25°C and 60 rpm.

The copolymer prepared by aqueous solution polymerization is usually a gel. The copolymer is cut into chips by an existing method and is then dried with, for example, a belt dryer or a far-infrared dryer at about 60°C to about 100°C. The dried copolymer is milled with, for example, a roll mill to provide a powdery copolymer. Subsequently, the particle size of the powdery copolymer is adjusted and, for example, an additive is added to the copolymer. Thus, the resultant copolymer is used as a polymeric flocculant.

At the time of use, a polymeric flocculant of the present invention may be mixed with an exisiting additive such as sodium hydrogensulfate, sodium sulfate, or a sulfamic acid as long as the additive does not cause any adverse effects on the dewatering treatment.

When added to various types of sludge, the polymeric flocculant of the present invention forms flocs having a superior balance in flocculating strength, filtration rate, and moisture content. There are no particular methods for adding to the sludge and for forming flocs. Methods in current use can be satisfactorily applied. The sludge to which the polymeric flocculant is applied is not particularly limited. Examples of the sludge include sludge generated from the treatment of domestic sewage, sludge generated from the treatment of wastewater from the food industry, sludge generated from the treatment of wastewater from the chemical industry, sludge generated from the treatment of piggery wastewater, and sludge generated from the pulp or paper manufacturing industry.

Although the polymeric flocculant of the present invention can be used alone, the polymeric flocculant may be used in combination with an inorganic flocculant or an organic cationic compound. Examples of the inorganic flocculant include aluminum sulfate, poly(aluminum chloride), ferric chloride, and poly(iron sulfate). Examples of the organic cationic compound include polymer-polyamines, polyamidines, and cationic surfactants.

In particular, when the polymeric flocculant of the present invention is an amphoteric polymeric flocculant, the polymeric flocculant is preferably added to sludge to which an inorganic flocculant is added. This dewatering method is more effective. In this case, after the addition of the inorganic flocculant, the pH of the sludge is preferably adjusted to 4 to 8, more preferably, 5 to 7.

The amount of the polymeric flocculant of the present invention to be added to sludge is generally 0.1% to 3% on the basis of the dry solid content of the sludge, and is preferably 0.2% to 2% on the basis of the dry solid content of the sludge. When the amount of the polymeric flocculant is less than 0.1%, the recovery of suspended substances from the sludge is insufficient. Even when the amount of the polymeric flocculant exceeds 3%, no improvement in effect is observed.

When a mixture including a polymer having high cationic property and a polymer having low cationic property is used as the water-soluble copolymer, the ratio of both components is appropriately determined according to, for example, the necessary amount of cation and the fiber content in the sludge to which the copolymer is applied. The ratio, i.e., the polymer having high cationic property : the polymer having low cationic property, is preferably 10:90 to 50:50 (by weight ratio). When the ratio of the polymer having high cationic property is less than 10, dewatering treatment is insufficiently performed overall. On the other hand, when the ratio of the polymer having high cationic property exceeds 90, the ability to form flocs becomes insufficient.

Although the details of this dewatering mechanism of sludge are not known, the mechanism is supposed as follows: The polymer component having high cationic property in the composition has a main role to neutralize electric charge in sludge. On the other hand, the polymer component having low cationic property has a main role to cross-link the formed flocs together. The use of these two kinds of polymers having different properties provides a superior effect in sludge dewatering treatment, even in sludge containing a large amount of excess sludge.

The flocs formed can be dehydrated with a dewatering apparatus such as a screw press dewatering machine, a belt press dewatering machine, a filter press dewatering machine, or a screw decanter to provide a dewatered cake.

The flocculant of the present invention can also be applied to a method for dewatering with a flocculator having a filtration part. Specifically, an example of the method includes the following steps. An inorganic flocculant is added to the sludge. The sludge is introduced into a flocculator having a filtration part after the polymeric flocculant is added to the sludge or together with the polymeric flocculant. The filtrate is taken out from the filtration part and flocculation is simultaneously performed. The flocs are dewatered with a dewatering machine.

The present invention will now be described in more detail with reference to Examples and Comparative Examples.

### <Example 1>

Allyloxy polyethyleneoxide monomethyl ether (the repeating number of ethylene oxide=9, trade name PKA-5010, molecular weight=1,500, manufactured by Nippon Oil & Fats Co., ltd. (i.e., NOF Corporation), hereinafter referred to as PKA-5010), an aqueous solution of quaternary methyl chloride salt of dimethylaminoethyl acrylate (hereinafter referred to as DAC), and an aqueous solution of acrylamide (hereinafter referred to as AM) were prepared in a reactor made of stainless steel in a proportion of 1.0 : 85.0 : 14.0 by mole percent respectively. Distilled water was added to the mixture such that the solution had a total weight of 1 kg and a total monomer concentration of 55 weight percent.

Subsequently, the temperature of the solution was controlled at 20°C while nitrogen gas was bubbled into the solution for 60 minutes. Thus, an aqueous solution of a monomer mixture for polymerization was prepared.

Subsequently, azobis(amidinopropane) hydrochloride (hereinafter referred to as V-50) and sodium hydrogensulfate were added to the solution in amounts of 1,000 ppm and 20 ppm, respectively, based on the weight of all monomers. A 100 W black light irradiated the solution from above the reactor at an irradiation intensity of 6.0 mW/cm² for 60 minutes to perform polymerization, thereby producing a water-soluble copolymer in an aqueous gel form.

The water-soluble copolymer in an aqueous gel form was taken out from the reactor and was then cut into chips. The copolymer chips were dried at 80°C for 5 hours and were then milled to prepare the powdery water-soluble copolymer. The copolymer had high-molecular weight. Since an aqueous solution containing 20 weight percent of the copolymer was a gel, the viscosity of the aqueous solution could not be measured.

This water-soluble copolymer was named polymeric flocculant P1, and the 0.1% insoluble residue and the 0.5% salted viscosity of the polymeric flocculant P1 were measured. Table 1 shows the results.

### <Example 2 and Comparative Examples 1 and 2>

Powdery water-soluble copolymers were produced as in Example 1, except that the monomers, the initiator, etc. were changed to the conditions shown in Table 1. The copolymers prepared had high-molecular weight. Since aqueous solutions containing 20 weight percent of the copolymers were a gel, the viscosity of the aqueous solutions could not be measured.

The above water-soluble copolymers were named polymeric flocculant P2, R1, and R2, and the 0.1% insoluble residue and the 0.5% salted viscosity of the copolymers were measured. Table 1 shows the results.

In the table, PKA-5015 represents allyloxy poly (ethylene glycol/propylene glycol) monobutyl ether [the ethylene glycol/propylene glycol was a block copolymer having a molar ratio of 75:25], having a molecular weight of 1,600 (manufactured by NOF Corporation). In the table, MEA represents methoxyethyl acrylate.

### <Comparative Examples 3 and 4>

Polymerization was performed as in Example 1, except that the monomers, the initiator, etc. were changed to the conditions shown in Table 1. However, the polymerization was not completed because of gelation.

In the table, AME400 represents acryloyloxy polyethyleneoxide monomethyl ether (number-average molecular weight 400, manufactured by NOF Corporation) and PME400 represents methacryloyloxy polyethyleneoxide monomethyl ether (number-average molecular weight 400, manufactured by NOF Corporation).

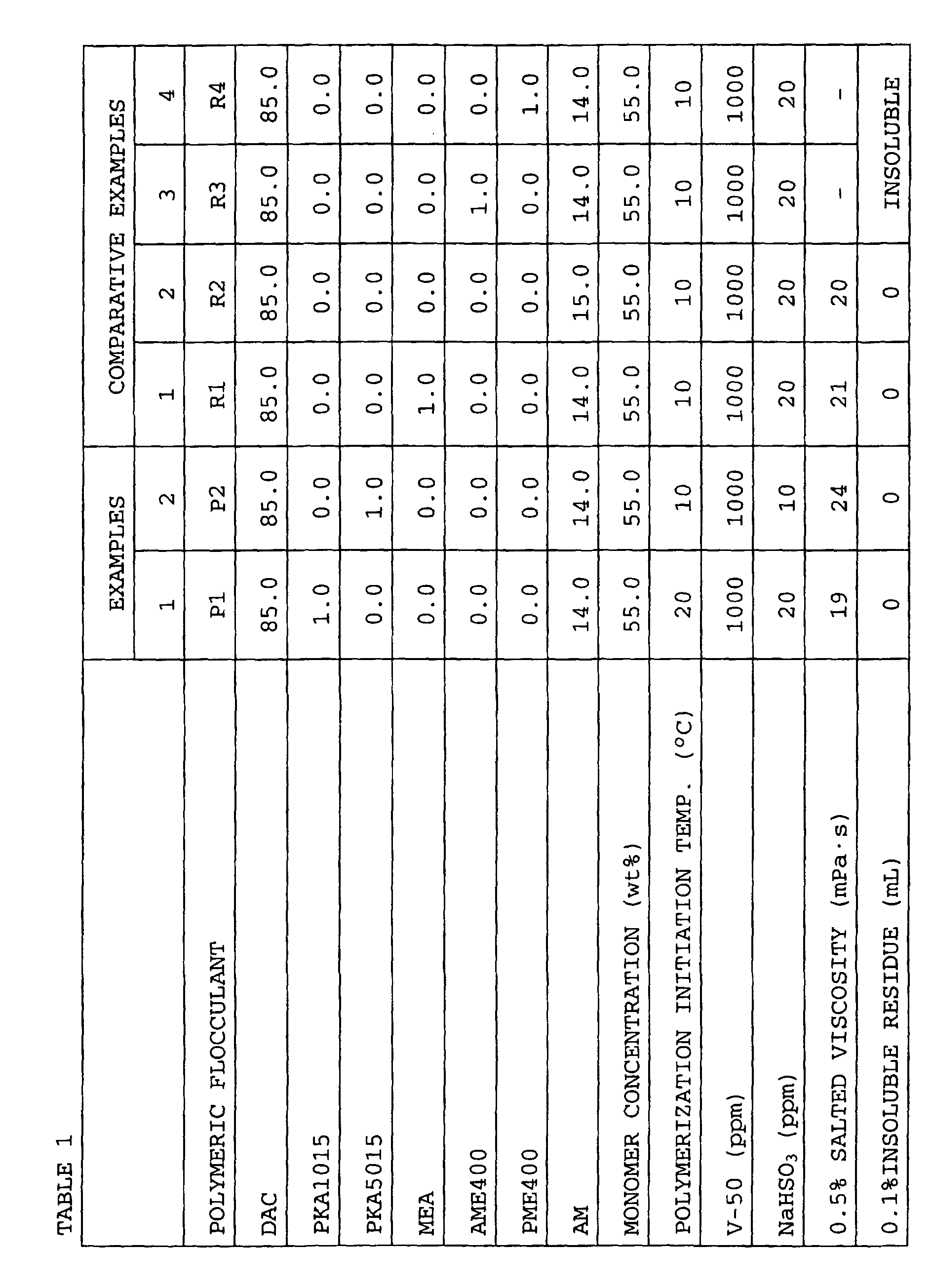

### <Examples 3 and 4 and Comparative Examples 5 and 6>

Sludge (200 mL) (SS: 10,000 mg/L, VSS: 8,100 mg/L) generated from the industrial wastewater was prepared in a 500 mL beaker. Any polymeric flocculants produced in Examples and Comparative Examples were added to the sludge. Subsequently, the mixture was mixed with a stirrer for 90 seconds to form sludge flocs. The particle diameters of the flocs were measured.

Then, the sludge floc dispersion was gravitationally filtered using an 80-mesh net as a filter. The volume of the filtrate was measured after 10 seconds. This value was shown as the filtration rate.

The resultant cake was compressively dewatered with a mini belt press (unit-area pressure: 0.5 kg/cm², three steps) to determine the moisture content. Table 2 shows these measurement results.

**TABLE 2**

| | EXAMPLES | | COMPARATIVE EXAMPLES | |
|---|---|---|---|---|
| | 3 | 4 | 5 | 6 |
| POLYMERIC FLOCCULANT | P1 | P2 | R1 | R2 |
| OPTIMAL CONTENT (ppm) | 150 | 150 | 150 | 150 |
| FLOC DIAMETER (mm) | 3∼4 | 4∼5 | 2∼4 | 2∼4 |
| FILTRATION RATE(mL/10sec.) | 122 | 130 | 110 | 109 |
| MOISTURE CONTENT IN FLOC (wt%) | 80.5 | 79.8 | 81.1 | 82.9 |

As is apparent from Examples 3 and 4, and Comparative Examples 5 and 6, polymeric flocculants in Examples have a superior filtration rate and decreased moisture content in the floc, compared with the polymeric flocculants in Comparative Examples.

When the moisture content in the floc is decreased by 2 weight percent, the amount of fuel oil used in the subsequent incineration process can be reduced by 10 weight percent.

### <Example 5>

Polymerization was performed as in Example 1, except that allyloxy polyethyleneoxide monomethyl ether [manufactured by NOF Corporation, trade name PKA-5005, the repeating number of ethylene oxide=34, number-average molecular weight=1,500, hereinafter referred to as PKA-5005], DAC, and AM were used in a proportion of 0.3 : 95 : 4.7 by mole percent to produce a water-soluble copolymer in an aqueous gel form. Also, a powdery water-soluble copolymer was produced. This water-soluble copolymer was named A-1, and the 0.1% insoluble residue and the 0.5% salted viscosity of copolymer A-1 were measured. Table 3 shows the results.

### <Examples 6 to 8 and Comparative Example 7>

Powdery water-soluble copolymers were produced as in Example 1, except that the monomers, the initiator, etc. were changed to the conditions shown in Table 3.

The 0.1% insoluble residue and the 0.5% salted viscosity of the water-soluble copolymers were measured. Table 3 shows the results.

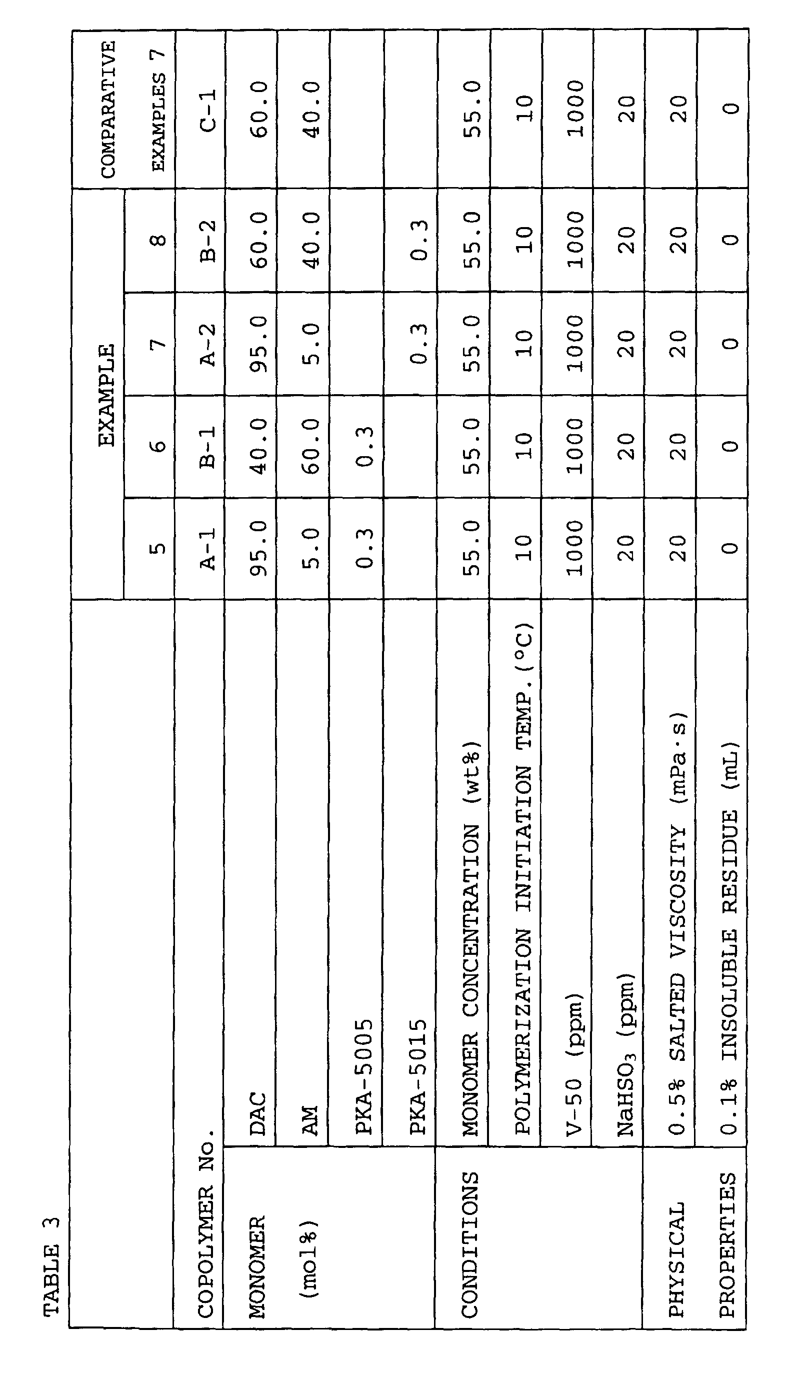

### <Example 9>

Copolymers A-1 and B-1 were dissolved in water with a mixing ratio of 35:65 (by weight ratio) to prepare a 0.2% aqueous solution. This solution was named flocculant 1.

### <Example 10>

Copolymers A-2 and B-2 were dissolved in water with a mixing ratio of 57:43 (by weight ratio) to prepare a 0.2% aqueous solution. This solution was named flocculant 2.

### <Examples 11 and 12>

A sludge mixture generated from municipal sewage (pH=6.5, SS=23,000 mg/L, VSS=18,000 mg/L) was used as a target sludge for treatment. Flocculant 1 or 2 was added to the sludge mixture. Optimal content, floc diameter, filtration rate, and moisture content in the floc were measured as in Example 3. Table 4 shows the evaluation results.

### <Example 13 and Comparative Example 8>

Optimal content, floc diameter, filtration rate, and moisture content in the floc were measured as in Example 11, except that a 0.2% aqueous solution of copolymer B-2 (Example 13) or copolymer C-1 (Comparative Example 8) was used as a flocculant. Table 4 shows the evaluation results.

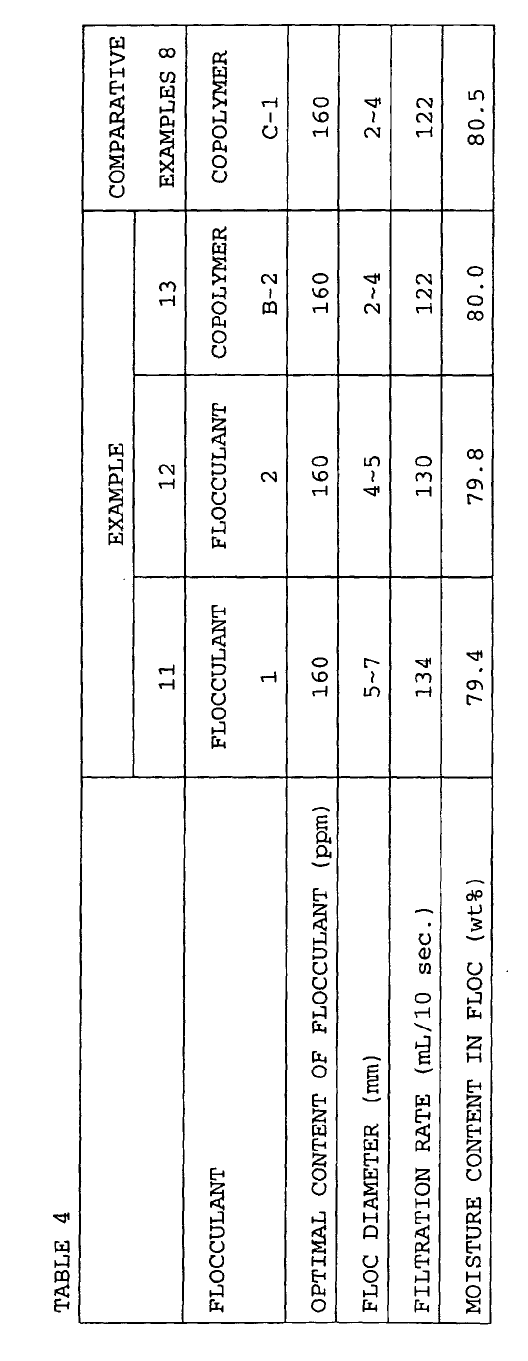

Referring to the results shown in Table 4, flocculants composed of the water-soluble copolymer of the present invention have a large floc diameter, high initial filtration rate, and low moisture content. Accordingly, the flocculants of the present invention provide flocs having superior performance.

### Industrial Applicability

The water-soluble copolymer of the present invention has high viscosity of an aqueous solution thereof, which is due to the structure, i.e., the grafted structure having a branch of polyalkyleneoxide. The water-soluble copolymer of the present invention can be widely used for various applications such as a polymeric flocculant; papermaking chemical agents used in the papermaking process such as a retention aid, a paper strength agent, a pitch controlling agent, and a sizing agent; a thickener used for, for example, a coating material; a builder used for, for example, a detergent; and a substrate for a plaster. Furthermore, the water-soluble copolymer of the present invention also shows superior characteristics in the applications.

When water-soluble copolymers blended with two polymers having different cationic properties are used as a polymeric flocculant, a superior effect in sludge dewatering treatment is achieved in various types of sludge, in particular, even in sludge containing a large amount of excess sludge.

## Claims

1. A water-soluble copolymer comprising a polymer produced by polymerizing a water-soluble monomer comprising a cationic monomer or a mixture of a cationic monomer and another monomer with a polyalkyleneoxide oligomer having an ethylenically unsaturated group represented by general formula (1) at one end thereof, wherein an aqueous solution of the polymer has a viscosity of 10,000 mPa·s or more (measured with a Brookfield viscometer, concentration: 20 weight percent):
R¹CH=C(R²)-X- (1)
[wherein each of R¹ and R² represents a hydrogen atom or an alkyl group of 1 to 3 carbon atoms; X represents -R³O-, -O-, or -R⁴NHCOO-; each of R³ and R⁴ represents an alkylene group of 1 to 4 carbon atoms, -Ph-, or -Ph-R⁵-; Ph represents a phenylene group that may have a substituent; and R⁵ represents an alkylene group of 1 to 4 carbon atoms].

2. The water-soluble copolymer according to claim 1, wherein the water-soluble monomer comprises a mixture of a cationic monomer and an anionic monomer, or the mixture further comprises another monomer.

3. The water-soluble copolymer according to claim 1, wherein the number of repeating units of the alkylene oxide unit in the polyalkyleneoxide oligomer is 5 or more.

4. The water-soluble copolymer according to claim 3, wherein the polyalkyleneoxide oligomer has an alkoxyl group of 1 to 8 carbon atoms at the other end thereof.

5. The water-soluble copolymer according to claim 1, wherein the polymer comprises a mixture comprising a polymer produced by polymerization of a water-soluble monomer containing 60 to 100 mole percent of a cationic monomer and a polymer produced by polymerization of a water-soluble monomer containing 0 to 50 mole percent of a cationic monomer.

6. The water-soluble copolymer according to claim 1, wherein the polymer comprises a mixture comprising a polymer produced by polymerization of a water-soluble monomer containing 60 to 100 mole percent of a cationic monomer and a polymer produced by polymerization of a water-soluble monomer containing 10 to 50 mole percent of a cationic monomer.

7. A polymeric flocculant comprising a water-soluble copolymer according to any one of claims 1 to 6.

8. A method for dewatering sludge comprising the steps of adding a water-soluble copolymer according to any one of claims 1 to 6 to sludge, and dewatering the mixture.
